# EUROPEAN PATENT APPLICATION

(11) **EP 1 033 515 A2**
(43) Date of publication of application: **06.09.2000**
(21) Application number: 00104233.2
(22) Date of filing: 01.03.2000
(51) Int. Cl.: F16K 11/044

(54) **Diverter tap for a bath fixture**

(30) Priority: 02.03.1999 IT MI990412
(71) Applicant: Emmevi Rubinetterie S.r.l., 28017 S. Maurizio D'Opaglio Novara (IT)
(72) Inventor: Negri, Bruno, 28021 Borgomanero (NO) (IT)
(74) Representative: Forattini, Amelia

(57) **Abstract**

A diverter tap for a bath fixture (1), including a body (3) adapted to be connected to the water mains and having at least a cold water inlet and a hot water inlet which are connected to a mixer duct; the mixer duct is connected to a mixing region which has an outlet for the mixed water which is connected to a diversion region which is adapted to selectively send the mixed water to the spout of the tap or to an additional connector (29). The diversion region is arranged between the cold and hot water inlets and the mixing region.

## Description

The present invention relates to a diverter tap for a bath fixture.

Bath fixtures are generally constituted by a body which has a cold water inlet and a hot water inlet, which are normally fixed to the wall and are connected to the water mains. The cold and hot water lines are conveyed to a mixing area, where generally there is a mixer cartridge which is conveniently controlled by the user in order to mix the hot and cold water, which flows out of the spout of the wing. A diverter is arranged on the wing so as to divert water into a connector for a flexible hose to which the shower head is applied. Once the mixer tap has been operated, the user can act on the diverter in order to optionally make the water flow out of the shower head, that is fixed to the flexible hose, or from the spout of the wing in order to fill the tub.

This type of construction, which is very common and is used in nearly all bath fixtures provided with a diverter for the shower, has the drawback of limiting the styling of the fixture owing to the position of the diverter.

Another disadvantage caused by the position of the diverter is that the flexible hose is rather distant from the edge of the bathtub, in an unsightly and awkward position.

The aim of the present invention is to provide a diverter tap for a bath fixture which overcomes the drawbacks of the prior art.

An object of the present invention is to provide a diverter tap for a bath fixture which allows the designer greater freedom as regards the design and styling of the bath fixture.

Another object is to provide a diverter tap for a bath fixture which is easier and less awkward in use.

Another object is to provide a diverter tap for a bath fixture which has a compact design and protrudes less than conventional fixtures having a diverter.

This aim, these objects and others which will become apparent hereinafter are achieved by a diverter tap for a bath fixture, comprising a body adapted to be connected to the water mains and having at least a cold water inlet and a hot water inlet which are connected to a mixer duct, the mixer duct being connected to a mixing region which has an outlet for the mixed water which is connected to a diversion region which is suitable to selectively send the mixed water to the spout of the tap or to an additional connector, characterized in that the diversion region is arranged between the cold and hot water inlets and the mixing region.

Further characteristics and advantages will become apparent from the description of a preferred but not exclusive embodiment of the invention, illustrated only by way of non-limitative example in the accompanying drawings, wherein:

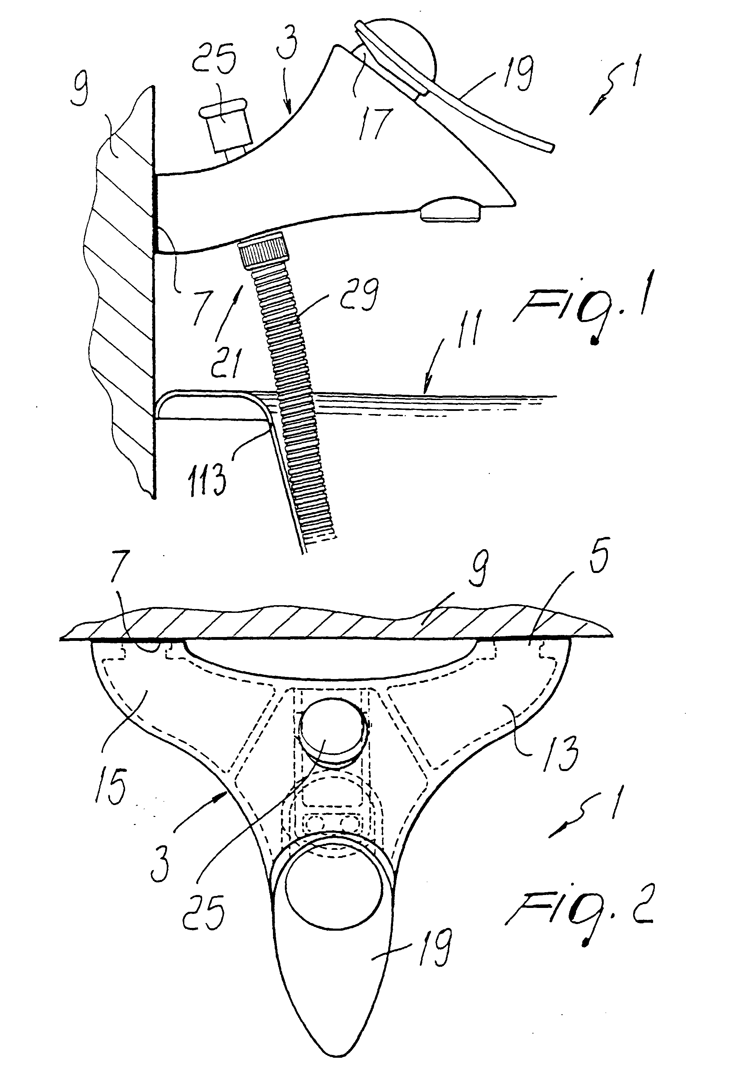

Figure 1 is a side view of the diverter tap for a bath fixture according to the present invention, applied to a wall over a bathtub;
Figure 2 is a partially sectional plan view of the diverter tap for a bath fixture according to the present invention;
Figure 3 is an enlarged-scale lateral sectional view of the diverter tap for a bath fixture of the preceding figures, with the diverter in the position for normal use (bath);

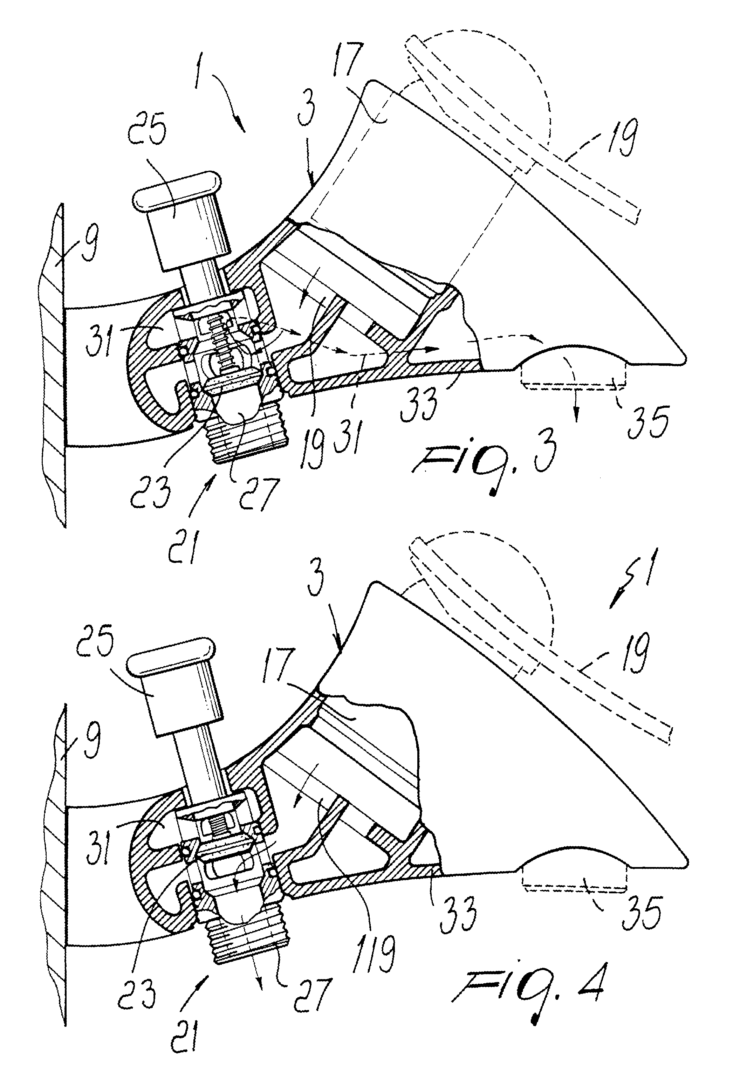

Figure 4 is a view, similar to Figure 3, with the diverter shown in the shower position.

With reference to the above figures, the diverter tap for a bath fixture according to the present invention, generally designated by the reference numeral 1, comprises a body 3 which has a cold water inlet 5 and a hot water inlet 7 which are connected, in a per se known manner, to the water mains, for example by means of connections to a wall 9 so that the fixture is arranged above a bathtub 11 at an edge 113 of the bathtub. The inlets 5 and 7 are connected, by virtue of respective ducts 13 and 15, to a mixing region which is constituted, in the illustrated embodiment, by a normal mixer cartridge 17 which is controlled from outside by means of a lever 19 in a per se known manner.

The mixed water outlet 119 is connected to a diversion region 21 which is arranged, according to the invention, between the mixing region and the hot and cold water inlets. The diversion region 21 includes a diverter, which can be of the conventional type, constituted for example by a piston 23 which is actuated by an external knob 25 in contrast with an elastic means which is constituted by a helical spring. The diverter is suitable to divert the mixed water that arrives from the outlet 119 into a connector 27 for a hose 29 or into an outlet duct 31 which is connected to a spout 35 by means of a wing 33. The dashed arrows indicate a possible path of the outlet duct 31 inside the body 3.

Within the scope of the invention, the arrangement and shape of the internal ducts can of course be different from the one shown by way of example, according to requirements.

In practice it has been found that the invention achieves the intended aim and objects, a diverter tap for bath fixture having been provided in which the diverter, instead of being arranged on the wing in front of the mixer or of the conventional valves, is arranged between the connectors and the mixer, thus allowing a more compact design of the fixture.

Another advantage of the diverter tap for bath fixture according to the present invention is the more advantageous position of the hose, which is practically flush to the edge of the bathtub.

The diverter tap for bath fixture according to the present invention can be designed more freely and with greater originality than conventional diverter taps.

It has also been noted that the rearward position of the diverter makes it easier for the user to activate it.

The diverter tap for bath fixture according to the invention is susceptible of numerous modifications and variations, all of which are within the scope of the inventive concept; all the details may furthermore be replaced with other technically equivalent elements.

The materials used, as well as the dimensions, may be any according to the requirements and the state of the art.

## Claims

1. A diverter tap for a bath fixture, comprising a body adapted to be connected to the water mains and having at least a cold water inlet and a hot water inlet which are connected to a mixer duct, said mixer duct being connected to a mixing region which has an outlet for the mixed water which is connected to a diversion region which is suitable to selectively send the mixed water to the spout of the tap or to an additional connector, characterized in that said diversion region is arranged between said cold and hot water inlets and said mixing region.

2. The tap according to claim 1, characterized in that said mixing region comprises a single-lever mixer cartridge.

3. The tap according to claim 1, characterized in that said mixing region comprises two separate valves for hot and cold water and a mixing union.

4. The tap according to claim 1, characterized in that said inlets are connected, by means of respective ducts, to said mixing region, which is constituted by a single-lever mixer cartridge, said mixed water outlet being connected to said diversion region, which comprises a diverter which is constituted by a piston which is actuated by an external knob in contrast with an elastic means which is constituted by a helical spring, said diverter being adapted to divert the mixed water selectively into said additional connector, which is constituted by a connector for a hose, or into an outlet duct, which is connected to said spout.

5. The tap according to one or more of the preceding claims, characterized in that it comprises one or more of the described and/or illustrated characteristics
